(19) Europäisches Patentamt
European Patent Office
Office européen des brevets

(11) EP 4 443 590 A1

(12) **EUROPEAN PATENT APPLICATION**
published in accordance with Art. 153(4) EPC

(43) Date of publication:
09.10.2024 Bulletin 2024/41

(21) Application number: 22950738.9

(22) Date of filing: 15.07.2022

(51) International Patent Classification (IPC):
$H01M\ 10/0568^{(2010.01)}$     $H01M\ 10/0525^{(2010.01)}$

(52) Cooperative Patent Classification (CPC):
H01M 10/0525; H01M 10/0568; Y02E 60/10

(86) International application number:
PCT/CN2022/106078

(87) International publication number:
WO 2024/011620 (18.01.2024 Gazette 2024/03)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Contemporary Amperex Technology
(Hong Kong) Limited
Central, Central And Western District (HK)

(72) Inventors:
• GUO, Jie
  Ningde City, Fujian 352100 (CN)
• HAN, Changlong
  Ningde City, Fujian 352100 (CN)
• WU, Zeli
  Ningde City, Fujian 352100 (CN)
• WANG, Guan
  Ningde City, Fujian 352100 (CN)

(74) Representative: Kraus & Lederer PartGmbB
Thomas-Wimmer-Ring 15
80539 München (DE)

(54) **SECONDARY BATTERY, BATTERY MODULE, BATTERY PACK AND ELECTRIC DEVICE**

(57)     The present application provides a secondary battery, a battery module, a battery pack, and an electrical device. The secondary battery includes a positive electrode plate comprising a positive electrode active material, a negative electrode plate comprising a negative electrode active material, a separator being disposed between the positive electrode plate the negative electrode plate and an electrolytic solution, comprising a first organic solvent and a film-forming additive and the film-forming additive being configured to form an interface film on the surface of the positive electrode active material and/or negative electrode active material, wherein a porosity of the separator is denoted as $\varepsilon$%; a mass percentage of the film-forming additive relative to a total mass of the electrolytic solution is denoted as b%; and a viscosity of the electrolytic solution at 25°C is denoted as c in mPa·s, and the secondary battery satisfies: $4 \le (b * \varepsilon)/c \le 240$. The present application can improve the fast charge/discharge performance and cycle life of the secondary battery.

5

Fig. 1

**Description**

**TECHNICAL** FIELD

The present application relates to the field of batteries, in particular to a secondary battery, a battery module, a battery pack, and an electrical device.

BACKGROUND

Secondary batteries have characteristics of high capacity, long service life, and the like, and thus have been widely used in electronic devices, such as mobile phones, notebook computers, scooters, electric vehicles, electric airplanes, electric ships, electric toy cars, electric toy ships, electric toy planes, and electric tools.

With increasingly wide use of batteries, requirements for performances of secondary batteries are increasingly stringent, such as the requirements for better fast charge/discharge performance and cycle life, so improvement of the fast charge/discharge performance and cycle life of secondary batteries is also a problem that needs to be solved urgently.

**SUMMARY**

The present application is based on the foregoing topic and aims to provide a secondary battery, a battery module, a battery pack, and an electrical device.

A first aspect of the present application provides a secondary battery, said secondary battery comprising a positive electrode plate, a negative electrode plate, a separator and an electrolytic solution; the positive electrode plate comprising a positive electrode active material; the negative electrode plate comprising a negative electrode active material; the separator being disposed between the positive electrode plate the negative electrode plate; and the electrolytic solution comprising a first organic solvent and a film-forming additive and the film-forming additive being configured to form an interface film on the surface of the positive electrode active material and/or negative electrode active material, wherein a porosity of the separator is denoted as $\varepsilon$%; a mass percentage of the film-forming additive relative to a total mass of the electrolytic solution is denoted as b%; and a viscosity of the electrolytic solution at 25°C is denoted as c in mPa s, and the secondary battery satisfies: $4 \le (b * \varepsilon)/c \le 240$; optionally, $4 \le (b * \varepsilon)/c \le 180$.

As a result, in the present application, the porosity of the separator, the viscosity of the electrolytic solution, and the film-forming additive are regulated to satisfy the above range, so that migration rate of lithium ions in a solid-phase mass transfer and in a liquid-phase mass transfer are regulated comprehensively, thereby improving average migration rate of lithium ions, and further improving fast charge performance of the secondary battery. In addition, the film-forming additive can not only regulate the viscosity of the electrolytic solution to further regulate migration rate of lithium ions in the liquid phase, but also can form a protective layer on the surface of the active materials to passivate the surface of the active materials to reduce the risk of side reactions between the surface of the active materials and the electrolytic solution, thereby improving structural stability of the active materials and improving cycle life of the secondary battery, in which the film-forming additive, especially a lithium salt additive, forms a solid electrolyte interface film on the surface of the negative electrode active material, and the interface film has a smaller impedance, and is more conducive to intercalation and deintercalation of lithium ions.

In any embodiment, the secondary battery further satisfies at least one of conditions (1) to (3): (1) $025 \le \varepsilon \le 55$; optionally, $30 \le \varepsilon \le 50$; (2) $0.1 \le b \le 8$; optionally, $0.1 \le b \le 6$; (3) $01 \le c \le 6$; optionally, $2 \le c \le 5$.

As a result, when the porosity of the separator of the present application is ≤within the above range, the porosity of the separator will not be too small, and the separator has a better liquid permeability, and lithium ions are capable of better penetrate it, which is conducive to the migration of lithium ions through the separator to a neighboring active material, and can further improve fast charge ability of the secondary battery. When the mass percentage of the film-forming additive is within the above range, the film-forming additive can have a film-forming reaction with the active materials to form a dense and uniform film layer, which provides good protection for the active materials, meanwhile, the film-forming additive, such as a lithium salt additive, can form a SEI film with a small film-forming impedance, taking into account the life and power. When the viscosity of the electrolytic solution is in the above range, the viscosity of the electrolytic solution is not too large, and the electrolytic solution has a relatively high ionic conductivity, which is favorable to improving an ionic transfer rate, and thus can improve fast charge capability of the secondary battery. In addition, when the viscosity of the electrolytic solution is in the above range, the electrolytic solution has relatively good compatibility with the positive and negative electrode plates, and it is not prone to a side reaction with the active materials in the positive and negative electrode plates, thereby being able to improve cycle stability of the secondary battery.

In any embodiment, a mass percentage of the first organic solvent relative to a total mass of the electrolytic solution is denoted as a%; and the secondary battery further satisfies: $2 \le c + 2*a\% \le 8$.

As a result, in the present application, the mass percentage of the first organic solvent can be regulated so that the viscosity of the electrolytic solution is controlled within a suitable range, and it is possible to enable formation of a stable interface film during a film-forming process, which is capable of completely covering the surface of the active materials.

In any embodiment, $60 \leq a \leq 90$; optionally, $65 \leq a \leq 85$.

In any embodiment, the first organic solvent comprises one or more of a linear carbonate solvent, a carboxylate solvent, and a nitrile solvent; optionally, the linear carbonate solvent comprises one or more of methyl ethyl carbonate EMC, diethyl carbonate DEC, dimethyl carbonate DMC, and methyl propyl carbonate MPC; optionally, the carboxylate solvent comprises one or more of ethyl acetate EA, methyl acetate MA, ethyl propionate EP, methyl formate MF, ethyl butyrate EB, butyl acetate BA, methyl propionate MP, methyl butyrate MB, propyl butyrate PB, and butyl butyrate BB; optionally, the nitrile solvent comprises one or more of acetonitrile AN, glutaronitrile GLN, and hexanedinitrile ADN.

As a result, the above solvents of the present application have a low viscosity, which can regulate the viscosity of the electrolytic solution as a whole in a suitable range; and in the case where the first organic solvent comprises more than two of organic solvents, it can synergistically regulate the viscosity and ionic conductivity of the electrolytic solution, and the plurality of solvents are able to participate in the film-forming reaction in order to make the film structure comprise a variety of components, thereby improving stability of the interface film.

In any embodiment, the film-forming additive comprises: a negative electrode film-forming additive, which is configured to form an interface film on the surface of the negative electrode active material, a mass percentage of which is denoted as b1% relative to the total mass of the electrolytic solution; a positive electrode film-forming additive, which is configured to form an interface film on the surface of the positive electrode active material, a mass percentage of which is denoted as b2% relative to the total mass of the electrolytic solution, and the secondary battery satisfies: $1 \leq b2/b1 \leq 60$; optionally, $1 \leq b2/b1 \leq 40$.

As a result, when the present application regulates the content of the negative electrode film-forming additive and the positive electrode film-forming additive to satisfy the above formula, it is possible to enable the electrolytic solution to form a SEI film on the surface of the negative electrode active material and to form a CEI film on the surface of the positive electrode active material, and the two films have a relatively low interface impedance, good dynamic activity, and small charge transfer impedance in the secondary battery, which is conducive to fast migration of lithium ions, thereby improving fast charge performance of the secondary battery.

In any embodiment, $0.01 \leq b1 \leq 1.5$; and/or $0.1 \leq b2 \leq 7$. When the film-forming additive is in the above range, it is possible to form a dense and stable interface film on the surface of the active materials, thereby providing sufficiently protection for the active materials, improving structural stability of the active materials, and ensuring cycle stability of the secondary battery.

In any embodiment, the negative electrode film-forming additive comprises one or more of a boron-containing lithium salt, a phosphorus-containing lithium salt, and a sulfur-containing lithium salt; optionally, the boron-containing lithium salt comprises one or more of lithium tetrafluoroborate $LiBF_4$, lithium bisoxalateborate LiBOB, and lithium bifluorooxalateborate LiDFOB; optionally, the phosphorus-containing lithium salt includes lithium difluorophosphate $LiPO_2F_2$, lithium fluorophosphate $Li_2PO_3F$, and lithium phosphate $Li_3PO_4$; optionally, the sulfur-containing lithium salt comprises one or more of lithium fluorosulfonate $LiFSO_3$, lithium sulfate $Li_2SO_4$, and lithium sulfamate $LiSO_3NH_2$.

As a result, the boron-containing lithium salt of the present application can form a SEI film with a stable structure and a relatively small impedance on the surface of the negative electrode active material, thereby improving the high and low temperature performance of the secondary battery. The phosphorus-containing lithium salt can form an SEI film rich in $Li_xPO_yF_z$ and LiF components on the surface of the negative electrode active material, and the SEI film has a low interface impedance and can significantly improve cycle performance of the secondary battery. The sulfur-containing lithium salt can form a dense and stable SEI film on the surface of the negative electrode active material, which can provide a further improved protection performance for the negative electrode active material.

In any embodiment, the positive electrode film-forming additive comprises a carbonate additive and/or a sulfate additive; optionally, the carbonate additive comprises one or more of vinylidene carbonate VC, fluoroethylene carbonate FEC, difluoroethylene carbonate DFEC, vinyl ethylene carbonate VEC, and dicaprylyl carbonate CC; optionally, the sulfate additive comprises a cyclic sulfonate additive and/or a hydrocarbyl sulfate additive; further optionally, the cyclic sulfonate additive comprises one or more of 1,3-propane sultone PS, propene sultone PES, and 3-fluoro-1,3-propane sultone FPS; the hydrocarbyl sulfate additive comprises one or more of ethylene sulfate DTD, diethyl sulfate DES, and dimethyl sulfate DMS.

As a result, the carbonate ester additive of the present application has a strong dielectric constant, and it is capable of dissolving lithium salts to a greater extent, so that lithium salts can dissociate lithium ions more easily, and conductivity of the electrolytic solution can be improved; and it cooperates with the first organic solvent each other, so that the dielectric constant and viscosity of the electrolytic solution can be better regulated, thereby improving ionic conductivity of the secondary battery; and it is capable of further improving an electrochemical window. The sulfate additive can form a dense and stable film layer, thus providing good protection for the active materials.

In any embodiment, the electrolytic solution further comprises a lithium salt, the lithium salt comprising one or more of lithium hexafluorophosphate LiPF$_6$, lithium bis(fluorosulfonyl)imide LiFSI, and lithium bis(trifluoromethylsulfonyl)imide LiTFSI; optionally, a mass percentage of the lithium salt relative to the total mass of the electrolytic solution is denoted as d%, and 5% $\leq$ d $\leq$ 25%; further optionally, 10% $\leq$ d $\leq$ 20%. The lithium salt can be regarded as a composite of lithium ions and anionic groups, which produces an important effect on the electrolytic solution. The aforementioned lithium salt has thermal stability; higher conductivity.

In any embodiment, the separator comprises a base material layer and a coating provided on a surface of the base material layer, and the base material layer is made of a base material comprising one or more of polyethylene, polypropylene, poly(p-phenylene terephthalamide), poly(ethylene terephthalate), poly(tetrafluoroethylene), poly(acrylonitrile), polyimide, polyamide; and/or the coating comprising a ceramic coating and/or a polymer coating; optionally, the ceramic coating comprises ceramic particles comprising one or more of SiO$_2$, Al$_2$O$_3$, AlOOH, CaO, TiO$_2$, MgO, ZnO, ZrO$_2$, Mg(OH)$_2$, and BaSO$_4$; and the polymer coating comprises a polymer material comprising one or more of polyethylene PE, polypropylene PP, poly(p-phenylene terephthalamide) PPTA, poly(ethylene terephthalate) PET, polytetrafluoroethylene PTFE, polyacrylonitrile PAN, polyimide PI, and polyamide PA.

As a result, the base material layer of the present application has a better transmittance for lithium ions, which is favorable to the migration of lithium ions; the base material layer is provided with a coating on the surface thereof, and the coating is able to further enhance mechanical properties of the separator.

A second aspect of the present application further provides a battery module, including the secondary battery according to any embodiment of the first aspect of the present application.

A third aspect of the present application further provides a battery pack, including the battery module according to the embodiment of the second aspect of the present application.

A fourth aspect of the present application further provides an electrical device, including the secondary battery according to any embodiment of the first aspect of the present application, the battery module according to the embodiment of the second aspect of the present application, or the battery pack according to the embodiment of the third aspect of the present application.

## DESCRIPTION OF THE DRAWINGS

In order to explain the technical solutions of the embodiments of the present application more clearly, the following will briefly introduce the drawings that need to be used in the embodiments of the present application. Obviously, the drawings described below are only some embodiments of the present application. A person of ordinary skill in the art can obtain other drawings based on the drawings without creative work.

Fig. 1 is a schematic diagram of an embodiment of a secondary battery of the present application.

Fig. 2 is an exploded schematic diagram of an embodiment of the secondary battery in Fig. 1.

Fig. 3 is a schematic diagram of an embodiment of a battery module of the present application.

Fig. 4 is a schematic diagram of an embodiment of a battery pack of the present application.

Fig. 5 is an exploded schematic diagram of an embodiment of the battery pack shown in Fig. 4.

Fig. 6 is a schematic diagram of an embodiment of an electrical device including the secondary battery of the present application as a power source.

The drawings are not drawn to actual scale.

Reference numerals are as follows:

1. Battery pack; 2. Upper box body; 3. Lower box body; 4. Battery module;

5. Secondary battery; 51. Housing; 52. Electrode assembly;

53. Cover plate; and

6. Electrical device.

## DETAILED DESCRIPTION

Hereinafter, embodiments of the secondary battery and the battery module, the battery pack and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

As used herein, the terms "a plurality of" mean two or more.

In the present application, the secondary battery may comprise a lithium-ion battery, a lithium-sulfur battery, a sodium-lithium-ion battery, a sodium-ion battery, or a magnesium-ion battery, and the like, and embodiments of the present application are not limited thereto.

The secondary battery comprises an electrode assembly and an electrolytic solution, and the electrode assembly comprises a positive electrode plate, a negative electrode plate, and a separator. The secondary battery mainly relies on metal ions moving between the positive electrode plate and the negative electrode plate to work, the positive electrode plate comprising a positive electrode active material, and the negative electrode plate comprising a negative electrode active material. Herein the metal ions may be lithium ions, sodium ions, and the like; lithium ions are used as the metal ions for illustrating the charge process next.

During the charging process of a secondary battery, the electrode dynamic process typically comprises the following steps. (1) de-intercalation step of lithium ions in which lithium ions are de-intercalated from the positive electrode active material and migrate toward an electrolyte phase; (2) liquid phase mass transfer step in the electrolyte phase in which solvated lithium ions in the electrolytic solution are diffusively transferred toward the surface of the negative electrode active material; (3) surface conversion step in which solvated lithium ions are adsorbed on the surface of the negative electrode active material and react with it to form a solid electrolyte interface (SEI) film during the first charging process, and subsequent the solvated lithium ions adsorb on the surface of the SEI film, and the lithium ions reach the surface of the negative electrode active material after a desolvation process during the subsequent charging process; (4) charge exchange step in which the lithium ions obtain electrons from the surface of the negative electrode active material and form embedded lithium generators; and (5) solid-phase mass transfer step of the embedded lithium generator in which the embedded lithium generators solid phase diffuse from the surface of the negative electrode active material into its interior, completing the charging process.

With the increase of charging rate, during the charging and discharging process, lithium ions are required to rapidly de-intercalate from the positive electrode active material and intercalate into the negative electrode active material, and also required to rapidly de-intercalate from the negative electrode active material and intercalate into the positive electrode active material. During this process, the solid-phase mass transfer and liquid-phase mass transfer of lithium ions are constraints affecting a migration rate of lithium ions, which has a significant effect on the fast charge performance of the secondary battery. In addition, during the charging and discharging process, side reactions may occur between the surface of the active materials and the electrolytic solution, thereby destroying structure of the active material and severely shortening its service life, which may lead to a reduction in cycle life of the secondary battery.

In view of this, the inventor improves the secondary battery and proposes a secondary battery in which the fast charge performance of the secondary battery is improved by improving migration rate of lithium ions in the solid-phase mass transfer and the liquid-phase mass transfer; and the cycle stability of the secondary battery is improved by providing protection for the surface of the active material thus to improve structural stability of the active material, thereby improving cycle life of the secondary battery. The technical solutions of the present application are next described in detail.

**Secondary battery**

In a first aspect, the present application provides a secondary battery. Secondary batteries, also known as rechargeable batteries or accumulators, are batteries that can be recharged after the battery is discharged so that active materials can be activated and continue to be used.

The secondary battery includes a positive electrode plate, a negative electrode plate, a separator and an electrolytic solution; the positive electrode active material comprising a positive electrode active material; the negative electrode plate comprising a negative electrode active material; the separator being disposed between the positive electrode plate the negative electrode plate; and the electrolytic solution comprising a first organic solvent and a film-forming additive and the film-forming additive being configured to form an interface film on the surface of the positive electrode active material and/or negative electrode active material, wherein a porosity of the separator is denoted as $\varepsilon\%$; a mass percentage of the film-forming additive relative to a total mass of the electrolytic solution is denoted as $b\%$; and a viscosity of the electrolytic solution at 25°C is denoted as c in mPa·s, and the secondary battery satisfies: $4 \leq (b * \varepsilon)/c \leq 240$.

Although the mechanism is not clear, the present application is able to improve the fast charge performance as well as cycle life of the secondary battery in a balanced manner, and the inventors hypothesize that the reasons are as follows:

In the migration process of lithium ions from a positive electrode plate to a negative electrode plate, the lithium ions are required to migrate from the positive electrode plate to a separator first, and then to migrate from the separator to the negative electrode plate; therefore, a porosity of the separator has a certain effect on migration rate of lithium ions, and therefore the application takes the porosity of the separator as one of variables regulated in this application.

In the liquid phase mass transfer process, lithium ions migrate in the electrolytic solution, and a viscosity of the electrolytic solution has a certain effect on migration rate of lithium ions, and the smaller its viscosity is, the more favorable it is for migration of lithium ions; therefore, the viscosity of the electrolytic solution has a certain effect on migration rate of lithium ions, and will be used as another variable regulated in the present application. The first organic solvent as a primary component of the electrolytic solution, and has a significant effect on the viscosity of the electrolytic solution, so the viscosity of the electrolytic solution can be regulated through selection of the first organic solvent; of course, the film-forming additive has also a certain effect on the viscosity of the electrolytic solution, so it is possible to control the mass percentage of the film-forming additive on the basis of the selection of the first organic solvent, in order to determine the ultimate viscosity of the electrolytic solution. The viscosity of the electrolytic solution in the appropriate range can better wet the separator, is conducive to rapid return of the electrolytic solution, and help rapid transmission of lithium ions in the charging and discharging process of secondary battery.

In the present application, the porosity of the separator, the viscosity of the electrolytic solution, and the film-forming additive are regulated to satisfy the above ranges, so that migration rates of lithium ions in a solid-phase mass transfer and in a liquid-phase mass transfer are regulated coordinately, thereby improving average migration rate of lithium ions, and further improving fast charge performance of the secondary battery. In addition, the film-forming additive can not only regulate the viscosity of the electrolytic solution to further regulate migration rate of lithium ions in the liquid phase, but also can form a protective layer on the surface of the active materials to passivate the surface of the active materials to reduce the risk of side reactions between the surface of the active materials and the electrolytic solution, thereby improving structural stability of the active materials and improving cycle life of the secondary battery, in which the film-forming additive, especially a lithium salt additive, forms a solid electrolyte interface (SEI) film on the surface of the negative electrode active material, and the interface film has a smaller impedance, and is more conducive to intercalation and deintercalation of lithium ions. Of course, the film-forming additive may comprise other types of additives, such as ester additives.

Optionally, $4 \leq (b*\epsilon)/c \leq 180$. By way of examples, $(b*\epsilon)/c$ may be 4, 5, 8, 10, 12, 15, 18, 20, 25, 30, 40, 50, 60, 70, 80, 90, 100, 120, 150, 160, 170, 180, 190, 200, 210, 220, 240, or within a range consisting of any two of the above values.

In some implementations, $25 \leq \epsilon \leq 55$.

When the porosity of the separator is within the above range, the porosity of the separator will not be too small, and the separator has a better liquid permeability, and lithium ions are capable of better penetrate it, which is conducive to the migration of lithium ions through the separator to a neighboring active material, and can further improve fast charge capability of the secondary battery. When the porosity of the separator will not be too large, the risk of a short circuit caused by direct contact between the positive electrode plate and the negative electrode plate is reduced; the separator has good mechanical properties, so that even when dendritic crystals are formed inside the secondary battery, the separator is not easy to be pierced through to result in a short circuit, thereby ensuring the safety performance of the secondary battery. Optionally, $30 \leq \epsilon \leq 50$. By way of examples, the porosity $\epsilon\%$ of the separator may be 25%, 28%, 30%, 32%, 35%, 38%, 40%, 42%, 45%, 46%, 48%, 50%, 52%, 53%, 54%, or 55%; or within a range consisting of any two of the above values.

In some embodiments, $0.1 \leq b \leq 8$.

When the mass percentage of the film-forming additive is within the above range, the film-forming additive can have a film-forming reaction with the active materials to form a dense and uniform film, which provides good protection for the active materials, and meanwhile, the film-forming additive, such as a lithium salt additive, can not only form a SEI film with a small film-forming impedance, but also make for the life and power. Optionally, $0.1 \leq b \leq 6$. By way of examples, the mass percentage $b\%$ of the film-forming additive may be 0.1%, 0.5%, 0.8%, 1%, 1.5%, 1.8%, 2%, 2.5%, 3%, 3.5%, 4%, 4.5%, 5%, 5.5%, 6%, 6.5%, 7%, 7.5%, or 8%; or within a range consisting of any two of the above values.

In some embodiments, $1 \leq c \leq 6$.

When the viscosity of the electrolytic solution is in the above range, the viscosity of the electrolytic solution is not too large, and the electrolytic solution has a relatively high ionic conductivity, which is favorable to improving an ionic transfer rate, and thus can improve fast charge capability of the secondary battery. In addition, when the viscosity of the electrolytic solution is in the above range, the electrolytic solution has relatively good compatibility with the positive and negative electrode plates, and it is not prone to a side reaction with the active materials in the positive and negative electrode plates, thereby being able to improve cycle stability of the secondary battery. Optionally, $2 \leq c \leq 5$. By way of examples, the viscosity $c$ (mPa·s) of the electrolytic solution may be 1 mPa·s, 1.5 mPa·s, 2 mPa·s s, 2.5 mPa·s, 3 mPa s, 3.5 mPa·s, 4 mPa s, 4.5 mPa·s, 5 mPa·s, 5.5 mPa·s or 6 mPa·s; or within a range consisting of any two of the above values.

In some embodiments, the mass percentage of the first organic solvent relative to the total mass of the electrolytic solution is denoted as $a$; the secondary battery further satisfies: $2 \leq c + 2*a\% \leq 8$.

The mass percentage of the first organic solvent can be regulated so that the viscosity of the electrolytic solution is controlled within a suitable range, and it is possible to enable formation of a stable interface film during a film-forming process, which is capable of completely covering the surface of the active materials. By way of examples, $c+2*a\%$ may be 2, 2.5, 3, 3.5, 4, 4.5, 5, 5.5, 6, 6.5, 7, 7.5, or 8; or within a range consisting of any two of the above values.

In some embodiments, $60 \leq a \leq 90$; optionally, $65 \leq a \leq 85$. By way of examples, the mass percentage $a\%$ of the first organic solvent relative to the total mass of the electrolytic solution may be 60%, 65%, 70%, 75%, 80%, 85%, or 90%; or in a range consisting of any two of the above values.

In some embodiments, the first organic solvent comprises one or more of a linear carbonate solvent, a carboxylate solvent, and a nitrile solvent. The above solvents have a low viscosity, which can regulate the viscosity of the electrolytic solution as a whole in a suitable range; and in the case where the first organic solvent comprises more than two of organic solvents, it can synergistically regulate the viscosity and ionic conductivity of the electrolytic solution, and the plurality of solvents are able to participate in the film-forming reaction in order to make the film structure comprise a variety of components, thereby improving stability of the interface film.

As an example of the liner carbonate solvent, the linear carbonate solvent comprises one or more of methyl ethyl carbonate EMC, diethyl carbonate DEC, dimethyl carbonate DMC, and methyl propyl carbonate MPC. The above linear carbonate solvent has a relatively low viscosity, which is favorable for ionic conductivity; and it has a high electrochemical stability with a high electrochemical window.

As an example of the carboxylate solvent, the carboxylate solvent comprises one or more of ethyl acetate EA, methyl acetate MA, ethyl propionate EP, methyl formate MF, ethyl butyrate EB, butyl acetate BA, methyl propionate MP, methyl butyrate MB, propyl butyrate PB, and butyl butyrate BB. The carboxylate solvent has a relatively lower viscosity and the combination of a plurality of carboxylate solvents enables the electrolytic solution to have a lower surface tension.

As an example of the nitrile solvent, the nitrile solvent comprises one or more of acetonitrile AN, glutaronitrile GLN, and hexanedinitrile AND. The above nitrile solvent has a low viscosity and a relatively high dielectric constant, which is conducive to enhancing migration rate of lithium ions; and the nitrile solvent has high stability and is not prone to side reactions with the surface of the active materials, which can ensure structural stability of the active materials, thus ensuring cycle stability of the secondary battery.

In some embodiments, the electrolytic solution may further comprise a second organic solvent, and the second organic solvent may comprise an ether solvent or the like. The ether solvent also has a relatively low viscosity, which is conducive to further improving the overall viscosity of the electrolytic solution; moreover, the ether solvent can enable lithium in the secondary battery to maintain a good morphology and structure during the charging and discharging cycling process, which is conducive to improving cycle stability of the secondary battery, and thereby improving cycle life of the secondary battery.

As an example of the ether solvent, said ether solvent may include diethyl ether and the like.

In some embodiments, the film-forming additive comprises: a negative electrode film-forming additive, which is configured to form an interface film on the surface of the negative electrode active material, a mass percentage of which is denoted as b1% relative to the total mass of the electrolytic solution; and a positive electrode film-forming additive, which is configured to form an interface film on the surface of the positive electrode active material, a mass percentage of which is denoted as b2% relative to the total mass of the electrolytic solution, and the secondary battery satisfies: $1 \leq b2/b1 \leq 60$.

The negative electrode film-forming additive can undergo a film-forming reaction on the surface of the negative electrode active material, thereby forming an SEI film on the surface of the negative electrode active material, and the SEI film in situ coats the surface of the negative electrode active material, which is capable of stabilizing the structure of the negative electrode active material, lowering the risk of the negative electrode active material and the electrolytic solution continuing to undergo a side reaction, and thereby ensuring the electrochemical performance of the negative electrode active material, meanwhile the negative electrode film-forming additive may include a lithium salt additive, the SEI film formed therefrom at the negative electrode has a lower impedance, and is more favorable to the intercalation and deintercalation of lithium ions.

The positive electrode film-forming additive can have a film-forming reaction on the surface of the positive electrode active material, so as to form a positive electrode solid electrolyte interface film (Cathode Electrolyte Interface (CEI) film) on the surface of the positive electrode active material, and the CEI film in situ covers the surface of the positive electrode active material, which is not only capable of stabilizing the structure of the positive electrode active material but also capable of reducing the risk of corrosion of the positive electrode active material by the electrolytic solution due to the decomposition of the electrolytic solution so as to lead to leaching out of the transition metal in the positive electrode active material, and which further provides protection for the positive electrode active material, thereby ensuring the electrochemical performance of the positive electrode active material.

In the present application, the CEI film and the SEI film are collectively referred to as an interface film.

When the present application regulates the contents of the negative electrode film-forming additive and the positive electrode film-forming additive to satisfy the above formula, it is possible to enable the electrolytic solution to form a SEI film on the surface of the negative electrode active material and to form a CEI film on the surface of the positive electrode active material, and the two films have a relatively low interface impedance, good dynamic activity, and small charge transfer impedance in the secondary battery, which is conducive to fast migration of lithium ions, thereby improving fast charge performance of the secondary battery. Optionally, $1 \leq b2/b1 \leq 40$. By way of examples, b2/b1 may be 1, 2, 3, 5, 8, 10, 15, 20, 22, 25, 28, 30, 32, 35, 40, 42, 45, 48, 50, 52, 55, 58, 60, or within a range consisting of any two of the above values.

In some embodiments, $0.01 \leq b1 \leq 1.5$.

When the negative electrode film-forming additive is in the above range, it is possible to form a dense and stable SEI film on the surface of the negative electrode active materials, thereby providing sufficiently protection for the negative electrode active materials, improving structural stability of the negative electrode active materials, and ensuring cycle stability of the secondary battery. Optionally, $0.1 \leq b1 \leq 1.2$. By way of examples, the mass percentage b1% of the negative electrode film-forming additive may be 0.01%, 0.05%, 0.1%, 0.5%, 0.8%, 1%, 1.2%, 1.3%, or 1.5%; or within a range consisting of any two of the above values.

In some embodiments, $0.1 \leq b2 \leq 7$.

When the positive electrode film-forming additive is in the above range, it is possible to form a dense and stable CEI film on the surface of the positive electrode active materials, thereby providing sufficiently protection for the positive electrode active materials, improving structural stability of the positive electrode active materials, and ensuring cycle stability of the secondary battery. Optionally, $0.5 \leq b2 \leq 5$. By way of examples, the mass percentage b2% of the positive electrode film-forming additive may be 0.1%, 0.5%, 0.8%, 1%, 1.2%, 1.3%, 1.5%, 2%, 2.5%, 3%, 3.5%, 4%, 4.5%, 5%, 5.5%, 6%, 6.5%, or 7%; or within a range consisting of any two of the above values.

As an example of the negative electrode film-forming additive, the negative electrode film-forming additive can comprise one or more of a boron-containing lithium salt, a phosphorus-containing lithium salt, and a sulfur-containing lithium salt.

The boron-containing lithium salt, as a lithium salt with a B atom as its center atom, can be coordinated with alkoxy, 1,2-benzenediol, o-hydroxyl, carboxylic acid and the like to form an anionic coordination complex, which is mainly of a large $\pi$-conjugate structure that allows a relatively dispersed distribution of delocalized negative charges of the center ion, and which results in an anion having a larger radius, making it difficult for the anion to form ion pairs with lithium ions with a stronger binding force in organic solvents. Thus, the lithium salt has a relatively good solubility. The more the electron-absorbing groups in the anionic complex, the more stable the anionic structure, the higher the solubility of lithium ions in the electrolytic solution, and the more conducive to improving the conductivity of the electrolytic solution. Moreover, the boron-containing lithium salt can form a SEI film with excellent performance on the surface of the negative electrode active material. The SEI film is insoluble in organic solvents, and it can be stable in an organic electrolytic solution, which can effectively reduce intercalation of solvent molecules into the negative electrode active material, thereby ensuring the structural stability of the negative electrode active material, and thus improving the cycle performance of the secondary battery.

The phosphorus-containing lithium salt additive has a relatively large anionic group with a high ionic conductivity, which is conducive to further improving dynamic performance of the electrolytic solution, and the phosphorus-containing lithium salt additive can form a CEI film on the surface of the positive electrode active material, and the CEI film as formed has a high lithium ion conductivity, which can significantly inhibit continuous decomposition of electrolyte and reduce leaching out of the transition metal ions in the positive electrode active material, thus improving the cycle performance of the secondary battery. In addition, the phosphorus-containing lithium salt additive is further capable of forming an SEI film on the surface of the negative electrode active material, which has a low interface impedance, thereby significantly improving the cycle performance of the battery.

The sulfur-containing lithium salt additive is insensitive to water in the electrolyte and is not prone to side reactions due to its better antioxidant property and high thermal stability; and the sulfur-containing lithium salt additive has a relatively high conductivity, which is conducive to enhancing migration rate of lithium ions, thereby enhancing the dynamitic performance of the electrolytic solution.

As an example of a boron-containing lithium salt, the boron-containing lithium salt can include one or more of lithium tetrafluoroborate ($LiBF_4$), lithium bisoxalate borate ($LiB(C_2O_4)_2$), abbreviated as LiBOB), and lithium difluorooxalate borate ($LiBC_2O_4F_2$, abbreviated as LiDFOB). Further, the boron-containing lithium salt includes a combination of lithium tetrafluoroborate $LiBF_4$, lithium bisoxalate borate ($LiB(C_2O_4)_2$, abbreviated as LiBOB), and lithium difluorooxalate borate ($LiBC_2O_4F_2$, abbreviated as LiDFOB).

When the lithium tetrafluoroborate $LiBF_4$ is used with an organic solvent such as a carbonate solvent in the electrolytic solution or an additive, the system based on the lithium tetrafluoroborate has a relatively low viscosity, which is conducive to the release of lithium ions, thereby improving conductivity of the electrolytic solution. The SEI film formed from the lithium tetrafluoroborate has a uniform thickness, good dynamics activity, and low charge transfer resistance in the secondary battery, which can significantly improve low-temperature performance of the secondary battery; and the SEI film is less prone to thermal decomposition, has relatively stable performance at high temperatures, and therefore can significantly improve the high-temperature performance of the secondary battery.

Either the lithium bisoxalate borate LiBOB or the lithium difluorooxalate borate LiDFOB has a passivation effect on a positive electrode current collector in the positive electrode plate, which can reduce the risk of corrosion of the positive electrode current collector due to side reactions with the positive electrode current collector and improve structural stability of the positive electrode plate. In addition, the electrolytic solution containing either the lithium bisoxalate borate LiBOB or the lithium difluorooxalate borate LiDFOB is unlikely to produce acidic substances, which can further reduce the risk of corrosion of the positive electrode current collector. The lithium bisoxalate borate LiBOB and the lithium difluorooxalate borate LiDFOB have good compatibility with the positive electrode active material, which is conducive to migration of lithium ions; and the LiBOB or the LiDFOB can form an effective SEI film on the surface of the negative electrode active material to improve protective performance for the negative electrode active material.

When the lithium tetrafluoroborate $LiBF_4$, the lithium bisoxalate borate LiBOB and the lithium difluorooxalate borate LiDFOB are used together, the SEI film formed from the three has a more complicated composition and a more stable structure; and on the basis of ensuring the structural stability, it is possible to ensure the SEI film to have a relatively small impedance, thereby ensuring the low-temperature performance of the secondary battery.

When the secondary battery of the present application comprises the above lithium salt, a SEI film with a stable structure and a relatively small impedance value can be formed on the surface of the negative electrode active material, thereby improving the high and low temperature performance of the secondary battery.

As an example of the phosphorus-containing lithium salt, the phosphorus-containing lithium salt may include one or more of lithium difluorophosphate $LiPO_2F_2$, lithium fluorophosphate $Li_2PO_3F$, and lithium phosphate $Li_3PO_4$.

The above-described phosphorus-containing lithium salt is an inorganic lithium phosphate salt, which is capable of forming a SEI film enriched with $Li_xPO_yF_z$ and LiF components on the surface of the negative electrode active material, and the SEI film has a low interface impedance, which is capable of significantly improving the cycle performance of the secondary battery. Moreover, in the initial charging process of the secondary battery, it can participate in the film formation of the positive electrode to form a stable CEI film with a low impedance, which can effectively reduce oxidative decomposition of the electrolyte, for example, side reaction between the carbonate solvent in the electrolyte and the surface of the positive electrode active material, thereby ensuring structural stability of the electrolyte, and alleviating destruction of the positive electrode active material and improving cycle performance of the secondary battery.

As an example of the sulfur-containing lithium salt, the sulfur-containing lithium salt may include one or more of lithium fluorosulfonate $LiFSO_3$, lithium sulfate $Li_2SO_4$, and lithium sulfamate $LiSO_3NH_2$.

The above-described sulfur-containing lithium salt can form a dense and stable SEI film on the surface of the negative electrode active material, which can further provide protection for the negative electrode active material.

In some embodiments, said positive electrode film-forming additive comprises a carbonate additive and/or a sulfate additive.

The carbonate additive includes one or more of vinylidene carbonate VC, fluoroethylene carbonate FEC, difluoroethylene carbonate DFEC, vinyl ethylene carbonate VEC, and dicaprylyl carbonate CC. The above-described carbonate ester additive can form a dense and stable film layer, which can further provide protection for the active materials. Moreover, the above-described carbonate ester additive has a strong dielectric constant, and it is capable of dissolving lithium salts to a greater extent, so that lithium salts can dissociate lithium ions more easily, and conductivity of the electrolytic solution can be improved; and it cooperates with the first organic solvent each other, so that the dielectric constant and viscosity of the electrolytic solution can be better regulated, thereby improving ionic conductivity of the secondary battery; and it is capable of further improving an electrochemical window.

The sulfate additive includes a cyclic sulfonate additive and/or a hydrocarbyl sulfate additive. Further, the cyclic sulfonate additive includes one or more of 1,3-propane sultone PS, propene sultone PES, and 3-fluoro-1,3-propane sultone FPS. The hydrocarbyl sulfate additive includes one or more of ethylene sulfate DTD, diethyl sulfate DES, and dimethyl sulfate DMS. The above-described sulfate additive can form a dense and stable film, thus providing good protection for the active materials.

In some embodiments, the electrolytic solution may further comprise a lithium salt. Lithium salts include one or more of lithium hexafluorophosphate LiPF6, lithium bis(trifluorosulfonyl)imide LiFSI, and lithium bis(trifluoromethylsulfonyl)imide LiTFSI.

The lithium salt can be regarded as a composite of a lithium ion and an anionic group, which produce an important effect on the electrolytic solution. The afore-mentioned lithium salt has thermal stability and higher conductivity.

In some embodiments, a mass percentage of the lithium salt relative to the total mass of the electrolytic solution is denoted as d%, with $5\% \leq d\% \leq 25\%$; further optionally, $10\% \leq d\% \leq 20\%$.

When the mass percentage of the lithium salt is in the above range, on the one hand, it is conducive to rapid migration of lithium ions; on the other hand, the lithium salt is able to form an interface film on the surface of the active material together with other substances, thereby stabilizing the active material. Optionally, $10\% \leq d\% \leq 20\%$. By way of examples, the mass percentage d% of the lithium salt may be 5%, 6%, 7%, 8%, 9%, 10%, 12%, 13%, 15%, 16%, 18%, 20%, 21%, 22%, 24%, 25%, or within a range consisting of any two of the above values.

The electrolytic solution of the present application can be prepared according to methods conventional in the art. For example, the additives, the solvents, the electrolyte salts and the like can be mixed well to obtain the electrolytic solution. There is no particular limitation on the order of addition of each material. For example, said additives, said electrolyte salts, and the like can be added to the non-aqueous solvent and mixed well to obtain a non-aqueous electrolytic solution.

In the present application, components and their contents in the electrolytic solution can be determined according to methods known in the art. For example, they can be determined by gas chromatography-mass spectrometry (GC-MS), ion chromatography (IC), liquid chromatography (LC), nuclear magnetic resonance spectroscopy (NMR), and the like.

It is to be denoted that, when the electrolytic solution of the present application is tested, a fresh electrolytic solution may be directly taken, or the electrolytic solution may be obtained from the secondary battery. An exemplary method for obtaining the electrolytic solution from the secondary battery includes the following steps: the secondary battery is discharged to a discharge cut-off voltage (for safety reasons, the battery is generally in a fully discharged state) and centrifuged, and then an appropriate amount of centrifuged liquid, namely, a non-aqueous electrolytic solution, is taken. The non-aqueous electrolytic solution may alternatively be directly obtained from an injection port of the secondary battery.

[Positive electrode plate]

In some embodiments, the positive electrode plate includes a positive electrode current collector and a positive electrode film layer disposed on at least one surface of the positive electrode current collector. For example, the positive electrode current collector has two opposite surfaces in its thickness direction, and the positive electrode film layer is disposed on either or both of the two opposite surfaces of the positive electrode current collector.

The positive electrode film layer includes a positive electrode active material, which may be a positive electrode active material commonly known in the art for secondary batteries. For example, the positive electrode active material may include at least one of a lithium transition metal oxide, a lithium-containing phosphate with an olivine structure, and respective modified compounds thereof. Examples of the lithium transition metal oxide may include at least one of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and respective modified compounds thereof. Examples of the lithium-containing phosphate with an olivine structure may include at least one of a lithium iron phosphate, a composite material of a lithium iron phosphate and carbon, a lithium manganese phosphate, a composite material of a lithium manganese phosphate and carbon, a lithium manganese iron phosphate, a composite material of a lithium manganese iron phosphate and carbon, and respective modified compounds thereof. The present application is not limited to these materials, and may also use other conventionally known materials that can be used as positive electrode active materials of secondary batteries. These positive electrode active materials may be used alone, or may be combined with two or more.

In some embodiments, the positive electrode active material includes $LiNi_xCo_yMn_zM_{1-x-y-z}O_2$ or $LiNi_aCo_bAl_cN_{1-a-b-c}O_2$, where M and N each are any one independently selected from Co, Ni, Mn, Mg, Cu, Zn, Al, Sn, B, Ga, Cr, Sr, V and Ti, $0 \leq y \leq 1$, $0 \leq x < 1$, $0 \leq z \leq 1$, $x+y+z \leq 1$, $0 \leq a \leq 1$, $0 \leq b \leq 1$, $0 \leq c \leq 1$, and $a+b+c \leq 1$. The positive electrode active material is used with the boron-containing lithium salt, and B atoms in the boron-containing lithium salt easily combine with O atoms in the positive electrode active material, thereby reducing charge transfer resistance of the positive electrode active material and reducing diffusion resistance of lithium ions within a bulk phase of the positive electrode active material. Therefore, when the non-aqueous electrolytic solution contains appropriate amounts of lithium tetrafluoroborate and lithium difluorooxalate borate, the low-cobalt or cobalt-free positive electrode active material can have a significantly improved lithium ion diffusion rate, and lithium ions in the bulk phase of the low-cobalt or cobalt-free positive electrode active material can be replenished to the surface in a timely manner so that excessive lithium de-intercalation from the surface of the low-cobalt or cobalt-free cathode active material may be avoided, thereby stabilizing crystal structure of the low-cobalt or cobalt-free cathode active material. The more stable crystal structure of the low-cobalt or cobalt-free positive electrode active material can greatly reduce probability of instability in structural, chemical, or electrochemical properties of the positive electrode active material due to the excessive lithium de-intercalation from the surface of the low-cobalt or cobalt-free positive electrode active material, such as irreversible distortion and increased lattice defects of the positive electrode active material.

$LiNi_xCo_yMn_zM_{1-x-y-z}O_2$ or $LiNi_aCo_bAl_cN_{1-a-b-c}O_2$ may be prepared according to a conventional method in the art. An exemplary preparation method is as follows: a lithium source, a nickel source, a cobalt source, a manganese source, an aluminum source, a precursor of an M element, and a precursor of an N element are mixed and sintered. The sintering atmosphere may be an oxygen-containing atmosphere, such as air atmosphere or oxygen atmosphere. The sintering atmosphere has an $O_2$ concentration of, for example, 70% to 100%. The sintering temperature and time may be adjusted according to an actual situation.

As an example, the lithium source includes, but is not limited to, at least one of lithium oxide ($Li_2O$), lithium phosphate ($Li_3PO_4$), lithium dihydrogen phosphate ($LiH_2PO_4$), lithium acetate ($CH_3COOLi$), lithium hydroxide (LiOH), lithium carbonate ($Li_2CO_3$), and lithium nitrate ($LiNO_3$). As an example, the nickel source includes, but is not limited to, at least one of nickel sulfate, nickel nitrate, nickel chloride, nickel oxalate, and nickel acetate. As an example, the cobalt source includes, but is not limited to, at least one of cobalt sulfate, cobalt nitrate, cobalt chloride, cobalt oxalate, and cobalt acetate. As an example, the manganese source includes, but is not limited to, at least one of manganese sulfate, manganese nitrate, manganese chloride, manganese oxalate, and manganese acetate. As an example, the aluminum source includes, but is not limited to, at least one of aluminum sulfate, aluminum nitrate, aluminum chloride, aluminum oxalate, and aluminum acetate. As an example, the precursor of the M element includes, but is not limited to, at least one of oxides, nitrate compounds, carbonate compounds, hydroxide compounds, and acetate compounds of the M element. As an example, the precursor of the N element includes, but is not limited to, at least one of ammonium fluoride, lithium fluoride, hydrogen fluoride, ammonium chloride, lithium chloride, hydrogen chloride, ammonium nitrate, ammonium nitrite, ammonium carbonate, ammonium bicarbonate, ammonium phosphate, phosphoric acid, ammonium sulfate, ammonium bisulfate, ammonium bisulfite, ammonium sulfite, ammonium bisulfide, hydrogen sulfide, lithium sulfide, ammonium sulfide, and elemental sulfur.

In some embodiments, based on a total mass of the positive electrode film layer, a layered material with molecular formula $LiNi_xCo_yMn_zM_{1-x-y-z}O_2$ or $LiNi_aCo_bAl_cN_{1-a-b-c}O_2$ has a mass percentage of 80% to 99%. For example, the mass percentage of the layered material with molecular formula $LiNi_xCo_yMn_zM_{1-x-y-z}O_2$ or $LiNi_aCo_bAl_cN_{1-a-b-c}O_2$ may be 80%, 81%, 82%, 83%, 84%, 85%, 86%, 87%, 88%, 89%, 90%, 91%, 92%, 93%, 94%, 95%, 96%, 97%, 98%, 99%, or within a range of any of the above values. Optionally, the mass percentage of the layered material with molecular formula $LiNi_xCo_yMn_zM_{1-x-y-z}O_2$ or $LiNi_aCo_bAl_cN_{1-a-b-c}O_2$ is 85% to 99%, 90% to 99%, 95% to 99%, 80% to 98%, 85% to 98%, 90% to 98%, 95% to 98%, 80% to 97%, 85% to 97%, 90% to 97%, or 95% to 97%.

In some embodiments, the positive electrode film layer may optionally further include a positive electrode conductive agent. There is no particular limitation to the type of the positive electrode conductive agent in the present application. As an example, the positive electrode conductive agent includes one or more of superconducting carbon, conductive graphite, acetylene black, carbon black, Ketjen black, carbon dots, carbon nanotubes, graphene, and carbon nanofibers. In some embodiments, based on the total mass of the positive electrode film layer, the positive electrode conductive agent is present in a mass percentage of 5% or less.

In some embodiments, the positive electrode film layer may further optionally include a positive electrode binder. There is no particular limitation on the type of the positive electrode binder in the present application. As an example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. In some embodiments, based on the total mass of the positive electrode film layer, the positive electrode binder is present in a mass percentage of 5% or less.

In some embodiments, the positive electrode current collector may be a metal foil or a composite current collector. As an example of the metal foil, an aluminum foil or an aluminum alloy foil may be used. The composite current collector may include a polymer material base layer and a metal material layer formed on at least one surface of the polymer material base layer. As an example, the metal material may include one or more of aluminum, aluminum alloy, nickel, nickel alloy, titanium, titanium alloy, silver and silver alloy, and the polymer material base layer may include one or more of polypropylene (PP), polyethylene terephthalate (PET), polybutylene terephthalate (PBT), polystyrene (PS) and polyethylene (PE).

The positive electrode film layer is usually formed by coating the positive electrode current collector with a positive electrode slurry, drying, and cold-pressing. The positive electrode slurry is usually formed by dispersing the positive electrode active material, the optional conductive agent, the optional binder, and any other components in a solvent and stirring uniformly. The solvent may be N-methylpyrrolidone (NMP), but is not limited thereto.

[Negative electrode plate]

The negative electrode plate includes a negative electrode current collector and a negative electrode film layer disposed on at least one surface of the negative electrode current collector, and the negative electrode film layer includes a negative electrode active material.

As an example, the negative electrolyte current collector has two surfaces opposite in its thickness direction, and the negative electrode film layer is disposed on either or both of the two opposite surfaces of the negative electrolyte current collector.

In some embodiments, the negative electrode active material may be a negative electrode active material commonly known in the art for batteries. As an example, the negative electrode active material may include at least one of artificial graphite, natural graphite, soft carbon, hard carbon, a silicon-based material, a tin-based material, lithium titanate, lithium-aluminum alloy, and the like. The silicon-based material may be selected from at least one of elemental silicon, a silicon oxide compound, a silicon carbon composite, a silicon nitrogen composite, and a silicon alloy. The tin-based material may be selected from at least one of elemental tin, a tin oxide compound, and a tin alloy. However, the present application is not limited to these materials, and other conventional materials that may be used as negative electrode active materials of batteries may alternatively be used. One type of these negative electrode active materials may be used alone, or two or more types may be used in combination.

In some embodiments, the negative electrode film layer may further optionally include a negative electrode binder. There is no particular limitation on the type of the negative electrode binder in the present application. As an example, the negative electrode binder may include one or more of styrene butadiene rubber (SBR), water-soluble unsaturated resin SR-1B, water-based acrylic resin such as polyacrylic acid PAA, polymethacrylic acid PMAA, and polyacrylic acid sodium PAAS, polyacrylamide (PAM), polyvinyl alcohol (PVA), sodium alginate (SA), and carboxymethyl chitosan (CMCS). In some embodiments, based on a total mass of the negative electrode film layer, the negative electrode binder is present in a mass percentage of 5% or less.

In some embodiments, the negative electrode film layer may further optionally include a negative electrode conductive agent. There is no particular limitation on the type of the negative electrode conductive agent in the present application. As an example, the negative electrode conductive agent includes one or more of superconducting carbon, conductive graphite, acetylene black, carbon black, Ketjen black, carbon dots, carbon nanotubes, graphene, and carbon nanofibers. In some embodiments, based on the total mass of the negative electrode film layer, the negative electrode conductive agent is present in a mass percentage of 5% or less.

In some embodiments, the negative electrode film layer may further optionally include other auxiliaries. As an example, the other auxiliaries may include a thickener, such as carboxymethyl cellulose sodium (CMC-Na) or a PTC thermistor material. In some embodiments, based on the total mass of the negative electrode film layer, the other auxiliaries are present in a total mass percentage of 2% or less.

In some embodiments, the negative electrode current collector may be a metal foil or a composite current collector. As an example of the metal foil, a copper foil or a copper alloy foil may be used. The composite current collector may include a polymer material base layer and a metal material layer formed on at least one surface of the polymer material base layer. As an example, the metal material may include one or more of copper, copper alloy, nickel, nickel alloy, titanium, titanium alloy, silver and silver alloy, and the polymer material base layer may include one or more of polypropylene (PP), polyethylene terephthalate (PET), polybutylene terephthalate (PBT), polystyrene (PS) and polyethylene (PE).

The negative electrode film layer is usually formed by coating the negative electrode current collector with a negative electrode slurry, drying, and cold-pressing. The negative electrode slurry is usually formed by dispersing the negative electrode active material, the optional conductive agent, the optional binder, and the other optional auxiliaries in a solvent and stirring uniformly. The solvent may be N-methylpyrrolidone (NMP) or deionized water, but is not limited thereto.

The negative electrode plate does not exclude other additional functional layers than the negative electrode film layer. For example, in some embodiments, the negative electrode plate further includes a protective layer covering the surface of the negative electrode film layer.

[Separator]

In some embodiments, the secondary battery further includes a separator. There is no particular limitation on the type of the separator in the present application. The separator may be any known porous separator with good chemical and mechanical stability.

In some embodiments, the separator comprises a base material layer and a coating provided on a surface of the base material layer, and the base material layer is made of a base material comprising one or more of polyethylene, polypropylene, poly(p-phenylene terephthalamide), poly(ethylene terephthalate), poly(tetrafluoroethylene), poly(acrylonitrile), polyimide, polyamide; and/or the coating comprising a ceramic coating and/or a polymer coating.

The base material layer has a better transmittance for lithium ions, which is favorable to the migration of lithium ions; the base material layer is provided with a coating on the surface thereof, and the coating is able to further enhance mechanical properties of the separator.

Optionally, the ceramic coating comprises ceramic particles comprising one or more of $SiO_2$, $Al_2O_3$, AlOOH, CaO, $TiO_2$, MgO, ZnO, $ZrO_2$, $Mg(OH)_2$, and $BaSO_4$.

Optionally, the polymer coating comprises a polymer material comprising one or more of polyethylene PE, polypropylene PP, poly(p-phenylene terephthalamide) PPTA, polyethylene terephthalate) PET, polytetrafluoroethylene PTFE, polyacrylonitrile PAN, polyimide PI, and polyamide PA. The polymer coating may be of the same or a different height as the base material layer, and the thickness of the polymer coating and the base material layer may be different, optionally, the thickness of the polymer coating is less than the thickness of the base material layer.

In other embodiments, the separator may be made of a material selected from at least one of glass fibers, a non-woven fabric, polyethylene, polypropylene, and polyvinylidene fluoride. The separator may be a single-layer thin film or a multi-layer composite thin film without special limitations. When the separator is a multi-layer composite thin film, materials of various layers may be the same or different without special restrictions.

In some embodiments, the positive electrode plate, the negative electrode plate, and the separator may be manufactured into an electrode assembly through a winding process or a stacking process.

In some embodiments, the secondary battery may include an outer package. The outer package may be used for packaging the foregoing electrode assembly and electrolyte.

In some embodiments, the outer package of the secondary battery may be a hard housing, such as a hard plastic housing, an aluminum housing, or a steel housing. Or the outer package of the secondary battery may be a soft bag, such as a pocket type soft bag. The soft bag may be made of plastic, which may be polypropylene, polybutylene terephthalate, poly(butylene succinate), and the like.

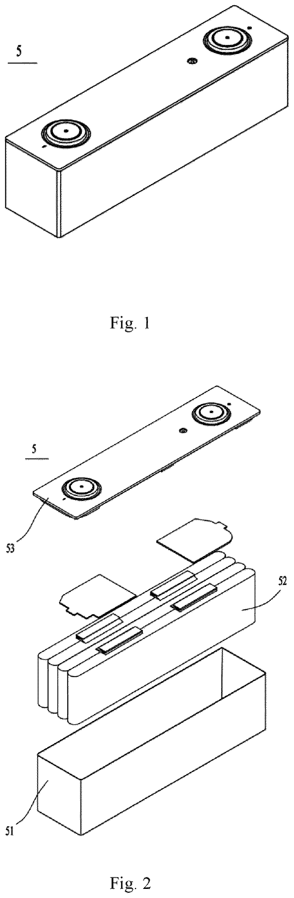

The present application does not have particular limitation to the shape of the secondary battery. The secondary battery may be cylindrical, square, or in any other shape. Fig. 1 shows a secondary battery 5 with a square structure as an example.

In some embodiments, as shown in Fig. 1 and Fig. 2, the outer package may include a housing 51 and a cover plate 53. The housing 51 may include a bottom plate and side plates connected to the bottom plate, and the bottom plate and the side plates enclose an accommodating cavity. The housing 51 has an opening in communication with the accommodating cavity, and the cover plate 53 is used to close the opening to seal the accommodating cavity. The positive electrode plate, the negative electrode plate, and the separator may be wound or laminated to form an electrode assembly 52. The electrode assembly 52 is packaged in the accommodating cavity. The electrolytic solution infiltrates the electrode assembly 52. The secondary battery 5 includes one or more electrode assemblies 52, which may be adjusted according to requirements.

A manufacturing method for the secondary battery in the present application is well-known. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding or laminating process, the electrode assembly is placed in an outer package and dried, then the electrolytic solution is injected, followed by vacuum packaging, standing, formation, shaping, and other processes, thereby obtaining the secondary battery.

In some embodiments of the present application, the secondary battery according to the present application may be assembled into a battery module. The battery module may include a plurality of secondary batteries, and the specific quantity may be adjusted according to the application and capacity of the battery module.

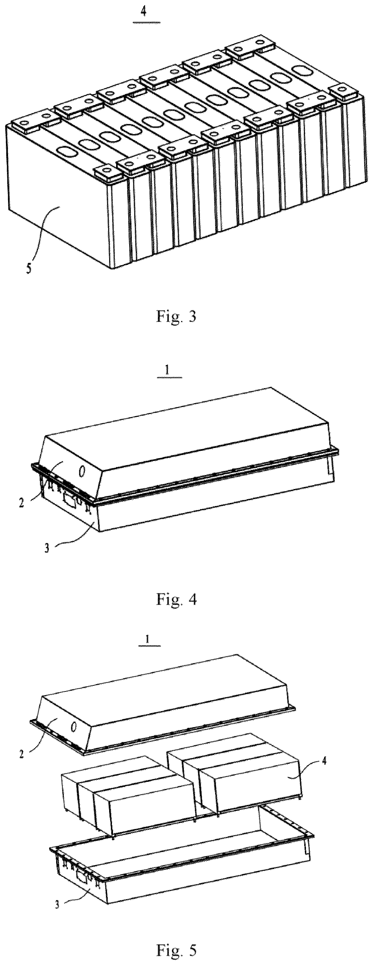

Fig. 3 is a schematic diagram of a battery module 4 as an example. As shown in Fig. 3, in the battery module 4, a plurality of secondary batteries 5 may be arranged in sequence along a length of the battery module 4. Of course, the secondary batteries may be arranged in any other manner. Further, the plurality of secondary batteries 5 may be fixed by fasteners.

Optionally, the battery module 4 may further include a housing having an accommodating space, and the plurality of secondary batteries 5 are accommodated in the accommodating space.

In some embodiments, the foregoing battery module may alternatively be assembled into a battery pack, and the quantity of the battery module included in the battery pack may be adjusted according to the application and capacity of the battery pack.

Fig. 4 and Fig. 5 are schematic diagrams of a battery pack 1 as an example. As shown in Fig. 4 and Fig. 5, the battery pack 1 may include a battery box and a plurality of battery modules 4 disposed in the battery box. The battery box includes an upper box body 2 and a lower box body 3. The upper box body 2 is used to cover the lower box body 3 to form a closed space for accommodating the battery modules 4. A plurality of battery modules 4 may be arranged in the battery box in any manner.

**Electrical device**

In a second aspect, the present application provides an electrical device, which includes at least one of the secondary battery, the battery module, and the battery pack of the present application. The secondary battery, the battery module, and the battery pack may be used as a power source of the electrical device or as an energy storage unit of the electrical device. The electrical device may be, but is not limited to, a mobile device (such as a mobile phone or a notebook computer), an electric vehicle (such as a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The electrical device may include the secondary battery, the battery module, or the battery pack according to its usage requirements.

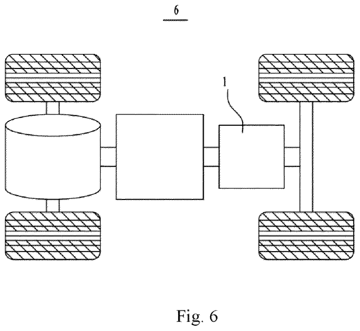

Fig. 6 is a schematic diagram of an electrical device as an example. The electrical device 6 is a pure electric vehicle, a hybrid electric vehicle, a plug-in hybrid electric vehicle, or the like. In order to meet requirements of the electrical device for high power and high energy density, the battery pack 1 or the battery module may be used.

As another example, the electrical device may be a mobile phone, a tablet computer, a notebook computer, or the like. The electrical device is generally required to be thin and light, so the secondary battery may be used as a power source.

**Examples**

The following examples more specifically describe the content disclosed in the present application, and these examples are only used for explanatory description, because various modifications and changes made within the scope of the content disclosed in the present application are apparent to those skilled in the art. Unless otherwise stated, all parts, percentages, and ratios described in the following examples are based on weight, all reagents used in the examples are commercially available or synthesized according to conventional methods and can be directly used without further treatment, and all instruments used in the examples are commercially available.

**Example 1**

1. Manufacturing of a positive electrode plate

An aluminum foil with a thickness of 12 $\mu$m was used as a positive electrode current collector.

A positive electrode active material $LiNi_{0.65}Co_{0.07}Mn_{0.28}$, a conductive agent carbon black, and polyvinylidene fluoride (PVDF) as a binder were fully mixed at a weight ratio of 97.5:1.4:1.1 in an appropriate amount of solvent NMP to form a uniform positive electrode slurry; and the positive electrode slurry was uniformly applied to a surface of the positive electrode current collector aluminum foil followed by drying and cold pressing to obtain a positive electrode plate.

2. Manufacturing of a negative electrode plate

A copper foil with a thickness of 8 $\mu$m was used as a negative electrode current collector.

A negative electrode active material graphite, styrene butadiene rubber (SBR) as a binder, carboxymethyl cellulose sodium (CMC-Na) as a thickener, and a conductive agent carbon black (Super P) were fully mixed at a weight ratio of 96.2:1.8:1.2:0.8 in an appropriate amount of solvent deionized water to form a uniform negative electrode slurry; and the negative electrode slurry was uniformly applied to a surface of the negative electrode current collector copper foil followed by drying and cold pressing to obtain a negative electrode plate

3. Separator

A porous polyethylene (PE) film was used as the separator.

4. Preparation of an electrolytic solution

In an environment with a water content less than 10 ppm, non-aqueous organic solvents including ethylene carbonate, methyl ethyl carbonate and diethyl carbonate were mixed at a volume ratio of 1:1:1 to obtain an electrolyte solvent. Subsequently, additives were dissolved into the mixed solvent to prepare the electrolytic solution with a lithium salt concentration of 1 mol/L. The particular substances contained in the electrolytic solution are shown in the following tables.

5. Manufacturing of a secondary battery

The positive electrode plate, the separator, and the negative electrode plate were stacked in sequence to ensure that the separator was located between the positive electrode plate and the negative electrode plate for separation, and then wound to obtain an electrode assembly; and the electrode assembly was placed in an outer package housing and dried, then the electrolytic solution was injected, followed by vacuum packaging, standing, formation, shaping, and other processes, thereby obtaining a lithium-ion battery.

**Example 2**

**Examples 2-1 to 2-8**

The secondary batteries in Examples 2-1 to 2-8 were manufactured by a similar method to Example 1, with the difference from Example 1 that the porosity $\varepsilon$% of the "separator" and $4 \leq (b*\varepsilon)/c \leq 240$ were adjusted. The specific parameters were shown in Tables 1 to 3.

**Comparative Examples**

**Comparative Example 1 and Comparative Example 2**

The secondary batteries in Comparative Example 1 and Comparative Example 2 were manufactured by a similar method to Example 1, with the difference from Example 1 that the porosity $\varepsilon$% of the "separator" was adjusted. The specific parameters were shown in Tables 1 to 3.

**Example 3**

**Examples 3-1 to 3-7**

The secondary batteries in Examples 3-1 to 3-7 were manufactured by a similar method to Example 1, with the difference from Example 1 that the mass percentage b1% the "negative electrode film-forming additive" was adjusted. The specific parameters were shown in Tables 1 to 3.

**Example 4**

**Examples 4-1 to 4-7**

The secondary batteries in Examples 4-1 to 4-7 were manufactured by a similar method to Example 1, with the difference from Example 1 that the mass percentage b2% the "positive electrode film-forming additive" was adjusted. The specific parameters were shown in Tables 1 to 3.

**Example 5**

**Examples 5-1 to 5-3**

The secondary batteries in Examples 5-1 to 5-3 were manufactured by a similar method to Example 1, with the difference from Example 1 that the mass percentage a% the "first organic solvent" was adjusted. The specific parameters were shown in Tables 1 to 3.

Table 1

| No. | Negative electrode film-forming additive | | | | | | b1 (%) |
| --- | --- | --- | --- | --- | --- | --- | --- |
| | Boron-containing lithium salt | | Phosphor-containing lithium salt | | Sulfur-containing lithium salt | | |
| | Type | Mass percentage b11 (%) | Type | Mass percentage b12 (%) | Type | Mass percentage b13 (%) | |
| Example 1 | LiDFOB | 0.40 | $LiPO_2F_2$ | 0.20 | $LiFSO_3$ | 0.07 | 0.67 |
| Example 2-1 | LiDFOB | 0.05 | $LiPO_2F_2$ | 0.05 | $LiFSO_3$ | 0.07 | 0.17 |
| Example 2-2 | LiDFOB | 0.10 | $LiPO_2F_2$ | 0.10 | $LiFSO_3$ | 0.07 | 0.27 |
| Example 2-3 | LiDFOB | 0.40 | $LiPO_2F_2$ | 0.20 | $LiFSO_3$ | 0.07 | 0.67 |
| Example 2-4 | LiDFOB | 0.60 | $LiPO_2F_2$ | 0.20 | $LiFSO_3$ | 0.07 | 0.87 |
| Example 2-5 | LiDFOB | 1.00 | $LiPO_2F_2$ | 0.20 | $LiFSO_3$ | 0.2 | 1.40 |
| Example 2-6 | LiDFOB | 0.40 | $LiPO_2F_2$ | 0.20 | $LiFSO_3$ | 0.07 | 0.67 |
| Example 2-7 | LiDFOB | 0.40 | $LiPO_2F_2$ | 0.20 | $LiFSO_3$ | 0.07 | 0.67 |
| Example 2-8 | LiDFOB | 0.40 | $LiPO_2F_2$ | 0.20 | $LiFSO_3$ | 0.07 | 0.67 |
| Comparative Example 1 | LiDFOB | 0.01 | $LiPO_2F_2$ | 0.01 | $LiFSO_3$ | 0.01 | 0.03 |
| Comparative Example 2 | LiDFOB | 0.40 | $LiPO_2F_2$ | 0.20 | $LiFSO_3$ | 0.07 | 0.67 |
| Example 3-1 | LiDFOB | 0.30 | $LiPO_2F_2$ | 0.10 | $LiFSO_3$ | 0.10 | 0.50 |
| Example 3-2 | LiDFOB | 0.10 | $LiPO_2F_2$ | 0.10 | $LiFSO_3$ | 0.04 | 0.24 |
| Example 3-3 | LiDFOB | 0.08 | $LiPO_2F_2$ | 0.05 | $LiFSO_3$ | 0.02 | 0.15 |
| Example 3-4 | LiDFOB | 0.05 | $LiPO_2F_2$ | 0.05 | $LiFSO_3$ | 0.02 | 0.12 |
| Example 3-5 | LiDFOB | 0.04 | $LiPO_2F_2$ | 0.04 | $LiFSO_3$ | 0.02 | 0.10 |
| Example 3-6 | LiDFOB | 0.30 | $Li_3PO_4$ | 0.10 | $LiFSO_3$ | 0.10 | 0.50 |
| Example 3-7 | LiBF4 | 0.10 | $LiPO_2F_2$ | 0.10 | $LiFSO_3$ | 0.04 | 0.24 |
| Example 4-1 | LiDFOB | 0.05 | $LiPO_2F_2$ | 0.05 | $LiFSO_3$ | 0.02 | 0.12 |
| Example 4-2 | LiDFOB | 0.05 | $LiPO_2F_2$ | 0.05 | $LiFSO_3$ | 0.02 | 0.12 |

(continued)

| No. | Negative electrode film-forming additive | | | | | | b1 (%) |
| | Boron-containing lithium salt | | Phosphor-containing lithium salt | | Sulfur-containing lithium salt | | |
| | Type | Mass percentage b11 (%) | Type | Mass percentage b12 (%) | Type | Mass percentage b13 (%) | |
|---|---|---|---|---|---|---|---|
| Example 4-3 | LiDFOB | 0.05 | $LiPO_2F_2$ | 0.05 | $LiFSO_3$ | 0.02 | 0.12 |
| Example 4-4 | LiDFOB | 0.05 | $LiPO_2F_2$ | 0.05 | $LiFSO_3$ | 0.02 | 0.12 |
| Example 4-5 | LiDFOB | 0.05 | $LiPO_2F_2$ | 0.05 | $LiFSO_3$ | 0.02 | 0.12 |
| Example 4-6 | LiDFOB | 0.05 | $LiPO_2F_2$ | 0.05 | $LiFSO_3$ | 0.02 | 0.12 |
| Example 4-7 | LiDFOB | 0.05 | $LiPO_2F_2$ | 0.05 | $LiFSO_3$ | 0.02 | 0.12 |
| Example 5-1 | LiDFOB | 0.40 | $LiPO_2F_2$ | 0.20 | $LiFSO_3$ | 0.07 | 0.67 |
| Example 5-2 | LiDFOB | 0.40 | $LiPO_2F_2$ | 0.20 | $LiFSO_3$ | 0.07 | 0.67 |
| Example 5-3 | LiDFOB | 0.40 | $LiPO_2F_2$ | 0.20 | $LiFSO_3$ | 0.07 | 0.67 |

In table 1, b1=b11+b12+b13.

Table 2

| No. | Positive electrode film-forming additive | | | | b2 (%) |
| | Carbonate additive | | Sulfate additive | | |
| | Type | Mass percentage b21(%) | Type | Mass percentage b22(%) | |
|---|---|---|---|---|---|
| Example 1 | FEC | 1.00 | DTD | 1.00 | 2.00 |
| Example 2-1 | FEC | 0.35 | DTD | 0.20 | 0.55 |
| Example 2-2 | FEC | 0.50 | DTD | 0.30 | 0.80 |
| Example 2-3 | FEC | 1.10 | DTD | 1.00 | 2.10 |
| Example 2-4 | FEC | 3.00 | DTD | 2.00 | 5.00 |
| Example 2-5 | FEC | 3.00 | DTD+PS | 3.00 | 6.00 |
| Example 2-6 | FEC | 3.00 | DTD+PS | 3.00 | 6.00 |
| Example 2-7 | FEC | 3.50 | DTD+PS | 3.50 | 7.00 |
| Example 2-8 | FEC | 3.50 | DTD+PS | 3.50 | 7.00 |
| Comparative Example 1 | FEC | 0.10 | DTD | 0.05 | 0.15 |
| Comparative Example 2 | FEC | 3.50 | DTD+PS | 3.50 | 7.00 |
| Example 3-1 | FEC | 3.00 | DTD+PS | 3.00 | 6.00 |
| Example 3-2 | FEC | 3.00 | DTD+PS | 3.00 | 6.00 |
| Example 3-3 | FEC | 3.00 | DTD+PS | 3.00 | 6.00 |
| Example 3-4 | FEC | 3.00 | DTD+PS | 3.00 | 6.00 |
| Example 3-5 | FEC | 3.00 | DTD+PS | 3.00 | 6.00 |
| Example 3-6 | FEC | 3.00 | DTD+PS | 3.00 | 6.00 |
| Example 3-7 | FEC | 3.00 | DTD+PS | 3.00 | 6.00 |
| Example 4-1 | FEC | 0.80 | DTD | 0.60 | 1.40 |

(continued)

| No. | Positive electrode film-forming additive | | | | | b2 (%) |
|---|---|---|---|---|---|---|
| | Carbonate additive | | Sulfate additive | | | |
| | Type | Mass percentage b21(%) | Type | Mass percentage b22(%) | | |
| Example 4-2 | FEC | 1.50 | DTD | 1.50 | | 3.00 |
| Example 4-3 | FEC | 3.00 | DTD | 1.80 | | 4.80 |
| Example 4-4 | FEC | 3.00 | DTD | 3.00 | | 6.00 |
| Example 4-5 | FEC | 3.50 | DTD | 3.50 | | 7.00 |
| Example 4-6 | VC | 0.80 | DTD | 0.60 | | 1.40 |
| Example 4-7 | FEC | 1.50 | DMS | 1.50 | | 3.00 |
| Example 5-1 | FEC | 1.00 | DTD | 1.00 | | 2.00 |
| Example 5-2 | FEC | 1.00 | DTD | 1.00 | | 2.00 |
| Example 5-3 | FEC | 1.00 | DTD | 1.00 | | 2.00 |

In table 2, b2=b21+b22.

**Table 3**

| No. | First organic solvent | | Separator | | b(%) | Viscosity of electrolytic solution c(mPa·s) | $(b*\varepsilon)/c$ | b2/b1 | c+2*a% |
|---|---|---|---|---|---|---|---|---|---|
| | Type | Mass percentage a% | Type | Porosity $\varepsilon$(%) | | | | | |
| Example 1 | EMC | 70 | PE | 30 | 2.67 | 4.0 | 20.0 | 3 | 5.4 |
| Example 2-1 | EMC | 60 | PE | 25 | 0.72 | 4.4 | 0.5 | 3 | 5.6 |
| Example 2-2 | EMC | 90 | PE | 30 | 1.07 | 3.2 | 1.2 | 3 | 5.0 |
| Example 2-3 | EMC+DMC | 70 | PE | 40 | 2.77 | 3.7 | 10.0 | 3 | 5.1 |
| Example 2-4 | EMC+DMC | 80 | PE | 45 | 5.87 | 3.3 | 80.0 | 6 | 4.9 |
| Example 2-5 | EMC+DMC | 90 | PP | 45 | 7.40 | 2.8 | 120.0 | 4 | 4.6 |
| Example 2-6 | EMC+EA | 90 | PP | 50 | 6.67 | 2.4 | 180.0 | 9 | 4.2 |
| Example 2-7 | EMC+MA | 90 | PE | 52 | 7.67 | 2.0 | 200.0 | 10 | 3.8 |
| Example 2-8 | DMC+EA | 90 | PE | 55 | 7.67 | 1.8 | 240.0 | 10 | 3.6 |
| Comparative Example 1 | EMC | 50 | PE | 5 | 0.18 | 8.0 | 0.1 | 5 | 9.0 |
| Comparative Example 2 | DMC+EA | 100 | PE | 56 | 7.67 | 1.4 | 300.0 | 10 | 3.4 |
| Example 3-1 | EMC | 70 | PE | 30 | 6.50 | 4.2 | 46.0 | 12 | 5.6 |
| Example 3-2 | EMC | 70 | PE | 30 | 6.24 | 4.2 | 45.0 | 25 | 5.6 |
| Example 3-3 | EMC | 70 | PE | 30 | 6.15 | 4.2 | 44.0 | 40 | 5.6 |
| Example 3-4 | EMC | 70 | PE | 30 | 6.12 | 4.2 | 44.0 | 50 | 5.6 |
| Example 3-5 | EMC | 70 | PE | 30 | 6.10 | 4.2 | 44.0 | 60 | 5.6 |
| Example 3-6 | EMC | 70 | PE | 30 | 6.50 | 4.2 | 46.0 | 12 | 5.6 |
| Example 3-7 | EMC | 70 | PE | 30 | 6.24 | 4.2 | 45.0 | 25 | 5.6 |
| Example 4-1 | EMC | 70 | PE | 30 | 1.52 | 4.0 | 11.0 | 12 | 5.4 |
| Example 4-2 | EMC | 70 | PE | 30 | 3.12 | 4.0 | 23.0 | 25 | 5.4 |
| Example 4-3 | EMC | 70 | PE | 30 | 4.92 | 4.0 | 37.0 | 40 | 5.4 |
| Example 4-4 | EMC | 70 | PE | 30 | 6.12 | 4.0 | 46.0 | 50 | 5.4 |
| Example 4-5 | EMC | 70 | PE | 30 | 7.12 | 4.0 | 53.0 | 60 | 5.4 |
| Example 4-6 | EMC | 70 | PE | 30 | 1.52 | 4.0 | 11.0 | 12 | 5.4 |

(continued)

| No. | First organic solvent | | Separator | | b(%) | Viscosity of electrolytic solution c(mPa·s) | $(b*\varepsilon)/c$ | b2/b1 | c+ 2*a% |
|---|---|---|---|---|---|---|---|---|---|
| | Type | Mass percentage a% | Type | Porosity ε(%) | | | | | |
| Example 4-7 | EMC | 70 | PE | 30 | 3.12 | 4.0 | 23.0 | 25 | 5.4 |
| Example 5-1 | DMC+EA | 90 | PE | 30 | 2.67 | 1.5 | 53.0 | 3 | 2.0 |
| Example 5-2 | EMC | 60 | PE | 30 | 2.67 | 6.8 | 12.0 | 3 | 8.0 |
| Example 5-3 | EMC | 80 | PE | 30 | 2.67 | 5.4 | 15.0 | 3 | 7.0 |

In table 3, b=b1+b2.

**Test section**

1. Test method for porosity $\varepsilon\%$ of separator

According to GB/T24586, the gas displacement method was used for measurement. Porosity $\varepsilon$ = (V1-V2)/V1*100%, where V1 was an apparent volume of a sample and V2 is a real volume of the sample.

2. Test Method for content of each component in the electrolytic solution

A freshly prepared electrolyte was received, or the electrolytic solution can be obtained from a secondary battery, and then one or more of the following methods were used for determination of each component of the electrolytic solution, including Gas Chromatography-Mass Spectrometry (GC-MS), Ion Chromatography (IC), Liquid Chromatography (LC), Nuclear Magnetic Resonance Spectroscopy (NMR), and the like.

Gas chromatography-mass spectrometry (GC-MS): In accordance with GB/T-9722-2006/GB/T6041-2002, the gas chromatography and the mass spectrometry were used in combination: after separation of components in a sample by gas chromatography, the components each was broken into ionic fragments in mass spectrometry, and was separated into specific mass spectra according to mass-to-charge ratios (m/z), so that qualitative analyses of the organic constituents in the electrolytic solution were obtained; then the organic components in the electrolytic solution were separated in a chromatographic column and the detection signal spectra of the components were generated, in which the retention time was used for characterization of the components, and the peak area was calibrated to achieve quantification, thereby obtaining the quantitative testing and analysis of the organic components in the electrolytic solution.

Ion chromatography (IC): In accordance with JY/T-020, anions of the lithium salt and lithium salt additives in the electrolytic solution were detected by ion chromatography for quantification.

Nuclear magnetic resonance spectrometry (NMR): in accordance with JY/T 0578-2020, qualitative and quantitative analysis of the components in the electrolytic solution were obtained.

3. Test method for viscosity c (mPa-s) of electrolytic solution at 25°C

At a certain temperature, a shear force on a rotor continuously rotating at a constant speed in a sample caused the spring to generate a torque, which was proportional to a viscosity, from which the viscosity was obtained. Specifically, the viscosity of the finished electrolytic solution was tested using a Böhlerfeld (DV-2TLV) viscometer. The ambient temperature was controlled to be 25°C and the ambient humidity was <80%. 30mL of electrolytic solution was taken and kept at a constant temperature in a water bath at 25°C for at least 30min, a rotor was loaded into a sample cup, the sample was added to a point about 0.3cm away from the mouth of the cup, and the connected viscometer was activated at a rotational speed of 70 RPM for the test. 10 data points were collected to obtain the average value of the multiple points.

4. Cycle performance test of the secondary battery

At 45°C, the secondary battery was charged with a constant current of 1 C to 4.3 V and continuously charged by the constant voltage until the current was 0.05 C, then the secondary battery was in a fully charged state, at which the charge capacity was recorded as a 1st cycle charge capacity. The secondary battery was allowed to stand for 5 min and then discharged by a constant current of 1 C to 2.8V, at which the discharge capacity was recorded as a 1st cycle discharge capacity. This was a charging and discharging cycle. The secondary battery was subjected to the above charging and discharging cycle according to the above method, and the discharge capacity after each cycle was recorded. Capacity retention rate (%) of the secondary battery at 45°C for 600 cycles = the 600th cycle discharge capacity / the 1st cycle discharge capacity $\times$ 100%.

5. Fast charge performance of secondary battery

At 25°C, the secondary battery prepared as described above was charged at a constant current of 0.33C to a charge cutoff voltage of 4.4V, after which it was charged at a constant voltage to a current of 0.05C, it was allowed to stand for 5min, and then the secondary battery was discharged at a constant current of 0.33C to a discharge cutoff voltage of 2.8V, and its actual capacity was recorded as C0.

Then the secondary battery was sequentially charged at a constant current of 0.5C0, 1C0, 1.5C0, 2C0, 2.5C0, 3C0, 3.5C0, 4C0, 4.5C0 to a full battery charge cutoff voltage of 4.4V or a 0V negative cutoff potential (whichever is reached first), and was required to be discharged at 1C0 to a full battery discharge cutoff voltage of 2.8V after completion of each charge. The negative electrode potentials corresponding to 10%, 20%, 30% ......80% SOC (State of Charge) at different charge rate rates were recorded to plot a rate-negative electrode potential curve at different SOC states. After linear fitting, the charging rates in different SOC states when the negative potential was 0V were obtained, and the charging rates were the charging window in the respective SOC states, which were recorded as C10%SOC, C20%SOC, C30%SOC, C40%SOC, C50%SOC, C60%SOC, C70%SOC, C80%SOC. According to the formula (60/C20%SOC + 60/C30%SOC + 60/C40%SOC + 60/C50%SOC). SOC + 60/C30%SOC + 60/C40%SOC + 60/C50%SOC + 60/C60%SOC + 60/C70%SOC + 60/C80%SOC) × 10%, the charging time T of the secondary battery from 10% SOC to 80% SOC was obtained. The shorter the charging time T, the better the fast charge performance of the secondary battery.

**Test results**

The cycle performance and fast charge performance of the secondary battery were improved as shown in Table 4.

Table 4

| No. | Cycle capacity retention rate (%) at 45°C | Charging time from 10 to 80%SOC at 25°C(min) |
|---|---|---|
| Example 1 | 90.0% | 25.0 |
| Example 2-1 | 86.0% | 26.0 |
| Example 2-2 | 88.0% | 27.0 |
| Example 2-3 | 89.0% | 22.0 |
| Example 2-4 | 88.8% | 25.0 |
| Example 2-5 | 88.2% | 26.0 |
| Example 2-6 | 87.0% | 20.0 |
| Example 2-7 | 86.5% | 18.0 |
| Example 2-8 | 86.0% | 17.0 |
| Comparative Example 1 | 80.0% | 40.0 |
| Comparative Example 2 | 78.0% | 30.0 |
| Example 3-1 | 90.0% | 25.0 |
| Example 3-2 | 89.0% | 25.5 |
| Example 3-3 | 88.4% | 26.0 |
| Example 3-4 | 87.0% | 26.5 |
| Example 3-5 | 86.5% | 27.0 |
| Example 3-6 | 90.0% | 25.0 |
| Example 3-7 | 89.0% | 25.5 |
| Example 4-1 | 88.0% | 25.0 |
| Example 4-2 | 88.5% | 25.5 |
| Example 4-3 | 89.0% | 26.0 |
| Example 4-4 | 87.0% | 26.5 |
| Example 4-5 | 86.6% | 27.0 |
| Example 4-6 | 88.0% | 25.0 |
| Example 4-7 | 88.5% | 25.5 |
| Example 5-1 | 89.0% | 22.0 |
| Example 5-2 | 87.0% | 25.5 |
| Example 5-3 | 90.1% | 23 |

As can be seen from Table 4, the porosity of the separator of Comparative Example 1 is too small, which may lead to a smaller migration rate of lithium ions during passage through the separator, thereby causing the secondary battery to have poor rapid charging capability. By coordinately regulating the porosity of the separator and the mass percentage of the film-forming additive of the secondary battery, it is possible to regulate the solid-phase transport rate of lithium ions; by regulating the viscosity of the electrolytic solution, it is possible to regulate the liquid-phase transport rate of lithium ions. As shown by Example 1 to Examples 2-8, by coordinately regulating all the porosity of the separator, the mass percentage of the film-forming additive and the viscosity of the electrolytic solution so that $4 \leq (b*\varepsilon)/c \leq 240$, and in particular $4 \leq (b*\varepsilon)/c \leq 180$, it is possible to significantly improve the combined transport rate of lithium ions in the solid phase and liquid phase, and thereby improve the fast charging capability of the secondary battery, compared to Comparative Example 2. Moreover, the additive in the electrolytic solution can form a film on the surface of the negative electrode active material, and thus can provide improved protection for the negative electrode active material and improve the cycle performance of the secondary battery.

As shown by Examples 3-1 to Examples 3-7, by regulating the mass percentage $b1\%$ of the negative electrode film-forming additive when $1 \leq b2/b1 \leq 60$, and in particular when $1 \leq b2/b1 \leq 40$, it is possible to provide adjustable protection for the negative electrode active material, thereby improving the cycle performance of the secondary battery.

As shown by Examples 4-1 to Examples 4-7, by regulating the mass percentage $b1\%$ of the positive electrode film-forming additive, when $1 \leq b2/b1 \leq 60$, in particular when $1 \leq b2/b1 \leq 40$, it is possible to provide adjustable protection for the positive electrode active material, thereby improving the cycle performance of the secondary battery.

As shown by Example 5-1 and Example 5-3, by regulating the mass percentage $a\%$ of the first organic solvent when $2 \leq c + 2*a\% \leq 8$, it is possible to regulate the overall migration rate of lithium ions, thereby improving the dynamitic performance of the secondary battery.

Although the present application is described with reference to the preferred embodiments, various improvements can be made and equivalents can be substituted for components therein without departing from the scope of the present application. In particular, as long as there is no structural conflict, various technical features mentioned in the embodiments may be combined in any manner. The present application is not limited to the specific embodiments disclosed herein, but includes all technical solutions falling within the scope of the claims.

**Claims**

1. A secondary battery, comprising

   a positive electrode plate, comprising a positive electrode active material;
   a negative electrode plate, comprising a negative electrode active material;
   a separator, being disposed between the positive electrode plate the negative electrode plate; and
   an electrolytic solution comprising a first organic solvent and a film-forming additive and the film-forming additive being configured to form an interface film on the surface of the positive electrode active material and/or negative electrode active material,
   wherein a porosity of the separator is denoted as $\varepsilon\%$; a mass percentage of the film-forming additive relative to a total mass of the electrolytic solution is denoted as $b\%$; and a viscosity of the electrolytic solution at 25°C is denoted as $c$ in mPa·s, and the secondary battery satisfies: $4 \leq (b * \varepsilon)/c \leq 240$; optionally, $4 \leq (b * \varepsilon)/c \leq 180$.

2. The secondary battery as claimed in claim 1, wherein the secondary battery further satisfies at least one of conditions (1) to (3):

$$(1)\ 25 \leq \varepsilon \leq 55;\ \text{optionally},\ 30 \leq \varepsilon \leq 50;$$

$$(2)\ 0.1 \leq b \leq 8;\ \text{optionally},\ 0.1 \leq b \leq 6;$$

and

$$(3)\ 1 \leq c \leq 6;\ \text{optionally},\ 2 \leq c \leq 5.$$

3. The secondary battery as claimed in claim 1 or 2, wherein

a mass percentage of the first organic solvent relative to a total mass of the electrolytic solution is denoted as a%; and

the secondary battery further satisfies: $2 \leq c+2*a\% \leq 8$.

4. The secondary battery as claimed in any one of claims 1 to 3, wherein
$60 \leq a \leq 90$; optionally, $65 \leq a \leq 85$.

5. The secondary battery as claimed in any one of claims 1 to 4, wherein

the first organic solvent comprises one or more of a linear carbonate solvent, a carboxylate solvent, and a nitrile solvent;
optionally, the linear carbonate solvent comprises one or more of methyl ethyl carbonate EMC, diethyl carbonate DEC, dimethyl carbonate DMC, and methyl propyl carbonate MPC;
optionally, the carboxylate solvent comprises one or more of ethyl acetate EA, methyl acetate MA, ethyl propionate EP, methyl formate MF, ethyl butyrate EB, butyl acetate BA, methyl propionate MP, methyl butyrate MB, propyl butyrate PB, and butyl butyrate BB;
optionally, the nitrile solvent comprises one or more of acetonitrile AN, glutaronitrile GLN, and hexanedinitrile ADN.

6. The secondary battery as claimed in any one of claims 1 to 5, wherein the film-forming additive comprises:

a negative electrode film-forming additive, which is configured to form an interface film on the surface of the negative electrode active material, a mass percentage of which is denoted as b1% relative to the total mass of the electrolytic solution;
a positive electrode film-forming additive, which is configured to form an interface film on the surface of the positive electrode active material, a mass percentage of which is denoted as b2% relative to the total mass of the electrolytic solution, and
the secondary battery satisfies: $1 \leq b2/b1 \leq 60$; optionally, $1 \leq b2/b1 \leq 40$.

7. The secondary battery as claimed in claim 6, wherein $0.01 \leq b1 \leq 1.5$; and/or $0.1 \leq b2 \leq 7$.

8. The secondary battery as claimed in claim 6 or 7, wherein the negative electrode film-forming additive comprises one or more of a boron-containing lithium salt, a phosphorus-containing lithium salt, and a sulfur-containing lithium salt;

optionally, the boron-containing lithium salt comprises one or more of lithium tetrafluoroborate $LiBF_4$, lithium bisoxalateborate LiBOB, and lithium bifluorooxalateborate LiDFOB;
optionally, the phosphorus-containing lithium salt includes lithium difluorophosphate $LiPO_2F_2$, lithium fluorophosphate $Li_2PO_3F$, and lithium phosphate $Li_3PO_4$;
optionally, the sulfur-containing lithium salt comprises one or more of lithium fluorosulfonate $LiFSO_3$, lithium sulfate $Li_2SO_4$, and lithium sulfamate $LiSO_3NH_2$.

9. The secondary battery as claimed in any one of claims 6 to 8, wherein the positive electrode film-forming additive comprises a carbonate additive and/or a sulfate additive;

optionally, the carbonate additive comprises one or more of vinylidene carbonate VC, fluoroethylene carbonate FEC, difluoroethylene carbonate DFEC, vinyl ethylene carbonate VEC, and dicaprylyl carbonate CC;
optionally, the sulfate additive comprises a cyclic sulfonate additive and/or a hydrocarbyl sulfate additive; further optionally, the cyclic sulfonate additive comprises one or more of 1,3-propane sultone PS, propene sultone PES, and 3-fluoro-1,3-propane sultone FPS; the hydrocarbyl sulfate additive comprises one or more of ethylene sulfate DTD, diethyl sulfate DES, and dimethyl sulfate DMS.

10. The secondary battery as claimed in any one of claims 1 to 9, wherein

the electrolytic solution further comprises a lithium salt, the lithium salt comprises one or more of lithium hexafluorophosphate $LiPF_6$, lithium bis(fluorosulfonyl)imide LiFSI, and lithium bis(trifluoromethylsulfonyl)imide LiTFSI;
optionally, a mass percentage of the lithium salt relative to the total mass of the electrolytic solution is denoted as d%, and 5% $\leq$ d $\leq$ 25%; further optionally, 10% $\leq$ d $\leq$ 20%.

11. The secondary battery as claimed in any one of claims 1 to 10, wherein

the separator comprises a base material layer and a coating provided on a surface of the base material layer, and the base material layer is made of a base material comprising one or more of polyethylene, polypropylene, poly(p-phenylene terephthalamide), polyethylene terephthalate), poly(tetrafluoroethylene), poly(acrylonitrile), polyimide, polyamide; and/or the coating comprising a ceramic coating and/or a polymer coating; optionally, the ceramic coating comprises ceramic particles comprising one or more of $SiO_2$, $Al_2O_3$, AlOOH, CaO, $TiO_2$, MgO, ZnO, $ZrO_2$, $Mg(OH)_2$, and $BaSO_4$; and the polymer coating comprises a polymer material comprising one or more of polyethylene PE, polypropylene PP, poly(p-phenylene terephthalamide) PPTA, poly(ethylene terephthalate) PET, polytetrafluoroethylene PTFE, polyacrylonitrile PAN, polyimide PI, and polyamide PA.

12. A battery module, comprising the secondary battery according to any one of claims 1 to 11.

13. A battery pack, comprising the battery module according to claim 12.

14. An electrical device, comprising the secondary battery according to any one of claims 1 to 11, the battery module according to claim 12, or the battery pack according to claim 13.

5

Fig. 1

5

53

52

51

Fig. 2

4

Fig. 3

1

Fig. 4

1

Fig. 5

6

1

Fig. 6

## INTERNATIONAL SEARCH REPORT

| International application No. |
|---|
| **PCT/CN2022/106078** |

**A. CLASSIFICATION OF SUBJECT MATTER**

H01M 10/0568(2010.01)i;  H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNKI, WPI, EPODOC: 电池, 正极, 阴极, 负极, 阳极, 隔膜, 隔离膜, 电解液, 成膜, 添加剂, SEI, CEI, 孔隙率, 粘度, 硼酸锂, 磷酸锂, 硫酸锂, 磺酸锂, battery, positive, electrode, cathode, negative, anode, separator, electrolyte, interface, additive, formation, porosity, viscosity, borate, phosphate, sulfate, sulfonate, lithium

**C. DOCUMENTS CONSIDERED TO BE RELEVANT**

| Category* | Citation of document, with indication, where appropriate, of the relevant passages | Relevant to claim No. |
|---|---|---|
| X | WO 2021127996 A1 (NINGDE CONTEMPORARY AMPEREX TECHNOLOGY CO., LTD.) 01 July 2021 (2021-07-01)<br>    description, p. 1, paragraph 6 to p. 9, paragraph 5 | 1-7, 9-14 |
| X | CN 112599860 A (JIANGSU SUNPOWER CO., LTD.) 02 April 2021 (2021-04-02)<br>    description, paragraphs 0005-0035 | 1-14 |
| Y | WO 2021127996 A1 (NINGDE CONTEMPORARY AMPEREX TECHNOLOGY CO., LTD.) 01 July 2021 (2021-07-01)<br>    description, p. 1, paragraph 6 to p. 9, paragraph 5 | 8 |
| Y | CN 104900916 A (GUANGZHOU TINCI MATERIALS TECHNOLOGY CO., LTD.) 09 September 2015 (2015-09-09)<br>    description, paragraphs 0008-0032 | 8 |
| A | CN 102082292 A (XI'AN SEFU ENERGY TECHNOLOGY CO., LTD.) 01 June 2011 (2011-06-01)<br>    entire document | 1-14 |
| A | JP 2008071746 A (SANYO ELECTRIC CO., LTD.) 27 March 2008 (2008-03-27)<br>    entire document | 1-14 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 November 2022** | **19 December 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2022/106078** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 103545552 A (HEFEI GUOXUAN HIGH-TECH POWER ENERGY CO., LTD.) 29 January 2014 (2014-01-29)<br>    entire document | 1-14 |

30

**INTERNATIONAL SEARCH REPORT**
**Information on patent family members**

International application No.

**PCT/CN2022/106078**

| Patent document cited in search report | | | Publication date (day/month/year) | Patent family member(s) | | | Publication date (day/month/year) |
|---|---|---|---|---|---|---|---|
| WO | 2021127996 | A1 | 01 July 2021 | EP | 3930049 | A1 | 29 December 2021 |
| | | | | US | 2022059867 | A1 | 24 February 2022 |
| | | | | CN | 114245943 | A | 25 March 2022 |
| | | | | IN | 202217017562 | A | 01 April 2022 |
| | | | | EP | 3930049 | A4 | 04 May 2022 |
| | | | | KR | 20220064394 | A | 18 May 2022 |
| CN | 112599860 | A | 02 April 2021 | | None | | |
| CN | 104900916 | A | 09 September 2015 | | None | | |
| CN | 102082292 | A | 01 June 2011 | CN | 102082292 | B | 26 December 2012 |
| JP | 2008071746 | A | 27 March 2008 | US | 2008038637 | A1 | 14 February 2008 |
| CN | 103545552 | A | 29 January 2014 | CN | 103545552 | B | 09 March 2016 |

Form PCT/ISA/210 (patent family annex) (January 2015)